# EUROPÄISCHE PATENTSCHRIFT

(11) **EP 4 069 705 B1**
(45) Veröffentlichungstag und Bekanntmachung des Hinweises auf die Patenterteilung: **20.09.2023**
(21) Anmeldenummer: 19816636.5
(22) Anmeldetag: 04.12.2019
(51) Int. Cl.: C07F 7/12

(54) **VERFAHREN ZUR HERSTELLUNG VON TRIMETHYLCHLORSILAN**
PROCESS FOR PREPARING TRIMETHYLCHLOROSILANE
PROCÉDÉ DE PRÉPARATION DE TRIMÉTHYLCHLOROSILANE

(43) Veröffentlichungstag der Anmeldung: 12.10.2022
(73) Patentinhaber: Wacker Chemie AG, 81737 München (DE)
(72) Erfinder: TILLMANN, Jan, 80636 München (DE); WEIDNER, Richard, 84489 Burghausen (DE)
(74) Vertreter: Fritz, Helmut
(86) Internationale Anmeldenummer: PCT/EP2019/083663
(87) Internationale Veröffentlichungsnummer: WO 2021/110256

(56) Entgegenhaltungen:
- EP-A1- 0 147 834

## Beschreibung

Die vorliegende Erfindung betrifft ein Verfahren zur Herstellung von Trimethylchlorsilan (M3) und Methyltrichlorsilan (M1) mittels Disproportionierung von Dimethyldichlorsilan (M2) in Gegenwart eines Al₂O₃-Katalysators, wobei das Dimethyldichlorsilan in Form einer Silanmischung eingesetzt wird, die 80- 100 Gew.-% Dimethyldichlorsilan (M2) enthält, und wobei der Differenzanteil zu 100 Gew.-% M1 und M3 enthält.

Trimethylchlorsilan (M3) ist ein industriell wichtiger Rohstoff, es findet z.B. in der Herstellung von Siliconen, zur Hydrophobierung und in der organischen Synthese Anwendung. Die technisch verfügbare Menge an M3 ist jedoch begrenzt. Es entsteht z.B. als Nebenprodukt im Müller-Rochow-Prozess, oder es kann aus Tetramethylsilan (TMS) - ebenfalls ein Nebenprodukt des Müller-Rochow-Prozesses - gewonnen werden. Die im Müller-Rochow-Prozess entstehende Silanmischung enthält das Hauptprodukt Dimethyldichlorsilan (M2) in Konzentrationen von 70 Gew.-% bis 90 Gew.-%, aber auch Methyltrichlorsilan (M1), Trimethylchlorsilan (M3), Dimethyltetrachlordisilan und andere Silane. Diese müssen durch Rektifikation voneinander getrennt werden.

In der Literatur sind bereits mehrere Verfahren zur Disproportionierung von M2 zu M3 und M1 beschrieben. Die EP0219718A1 offenbart hierzu die Disproportionierung von M2 zu M3 und M1 mit einem Katalysatorkomplex aus AlX₃ und CuXₙ, wobei X ein Halogenatom und n gleich 1 oder 2 ist. Konkret werden in den Beispielen 2 und 3 mehrere Versuche durchgeführt, bei denen (CH₃)₂SiCl₂ in Gegenwart von CuCl/AlCl₃ 5 Stunden bei Temperaturen im Bereich von 264-300 °C im Autoklav bei Drücken zwischen 34,5-37,95 bar umgesetzt wird. Es wird sowohl das molare Verhältnis CuCl/AlCl₃ als auch die Temperatur variiert. Auf diese Weise werden in Beispiel 3 maximal 8,19 Gew.-% an M3 erhalten, einmal bei einer Temperatur von 323 °C, 5,05 Gew.-% AlCl₃ und einem molaren Verhältnis von CuCl/AlCl₃ von 0,26 und ein anderes Mal bei einer Temperatur von 322 °C, 5,05 Gew.-% AlCl₃ und einem molaren Verhältnis von CuCl/AlCl₃ von 0,5. Es werden unter diesen Bedingungen allerdings auch 17,03 Gew.-% bzw. 17,99 Gew.-% an M1 hergestellt. Der Gehalt an M3 von 8,19 Gew.-% soll 85 % des möglichen thermodynamischen Gleichgewichts in Bezug auf M3 entsprechen. Ein grundsätzlich negativer Punkt an dem offenbarten Verfahren ist, dass ein kontinuierliches Verfahren nicht möglich wäre, da AlCl₃ bei ca. 180 °C sublimiert und damit aus dem Reaktor ausgetragen werden würde. Der überstöchiometrische Anteil an M1 im Produktgemisch weist zudem darauf hin, dass es zu einer Zersetzung von Methylchlorsilan gekommen sein muss, also ungünstige Nebenreaktionen ablaufen. Das beschriebene Verfahren ist somit nicht geeignet, um M3 in technisch relevanten Mengen herzustellen.

Die US3,384,652 offenbart Disproportionierungsreaktionen von Organo(chlor)silanen in Gegenwart von kristallinen Alumosilikatalysatoren (Zeolithen). Unter anderem wird die Disproportionierung von Dimethyldichlorsilan (M2) zu Trimethylchlorsilan (M3) und Methyltrichlorsilan (M1) an Wasserstoff-Zeolith Y unter Refluxbedingungen offenbart, bei der 25 % M3, 22 % M1, 5 % SiCl₄ und 8 % TMS erhalten werden. Weiterhin sind noch 40 % M2 im Produktgemisch enthalten, das nicht abreagiert ist. Die erhaltenen Mengen an M3 und M1 sowie die Entstehung von SiCl₄ und TMS widersprechen allerdings der Thermodynamik der Disproportionierungsreaktion.

Zudem sind in der Literatur Verfahren zur Anreicherung von Trimethylchlorsilan (M3) in niedrigsiedenden Silanmischungen (aus dem Müller-Rochow-Prozess) bekannt.

Die EP0147834A1 offenbart ein kontinuierliches Verfahren zur Disproportionierung eines einzelnen Silans der allgemeinen Formel **RₙSiX₄₋ₙ,** mit **R** = H, Phenyl oder C₁-C₅-Alkyl; **x** = Halogen und **n** = 1, 2 oder 3, wobei das entsprechende Silan mit einem aktivierten, kristallinen γ-Aluminiumoxid-Katalysator oder η-Aluminiumoxid-Katalysator bei einer Temperatur von 200-450 °C für maximal 10 Minuten kontaktiert wird, wobei aktiviert bedeutet, dass der Katalysator zuvor entweder (a) für 0,5 - 2 Stunden bei 500 - 600 °C, oder (b) im Vakuum bei 400 - 500 °C, oder (c) mit reaktiven Gasen wie HF oder HCl behandelt wurde. Konkret werden in Beispiel 1 mehrere Versuche durchgeführt, bei denen die Niedrigsiederfraktion des Müller-Rochow-Prozesses mit M2 angereichert wird (Ausgangszusammensetzung: M2 = 50,4 %, TMS = 35.8 %) und in Gegenwart von (γ-Al₂O₃ SA-6173, 3,2 mm Extrudate, aktiviert für 0,5 Stunden bei 400 °C) in einem Rohrreaktor umgesetzt wird. Es wird sowohl die Temperatur als auch die Flußrate variiert, die Umsetzung erfolgt drucklos. Auf diese Weise werden Gehalte zwischen 58,0 - 68,3 % an M3 erhalten, bei Temperaturen von 300 oder 400 °C und einer Flußrate zwischen 0,27-1,07 ml/min.
Beispiel 2: Ausgangsgehalt M2 = 51,7 % und TMS = 38,7 %, Katalysator A (γ-Al₂O₃ SA-6173, 3,2 mm Extrudate, aktiviert für 0,5 Stunden bei 400 °C), 0-2,4 bar Druck, 200-400 °C, Flußrate 0,29-1,17 ml/min. Es werden Gehalte an M3 zwischen 30,2-72,9 % erreicht.
Beispiel 3: Ausgangsgehalt M2 =36,5 % und TMS = 23,2 %, Katalysator B (γ-Al₂O₃ SA-6173, 1,6 mm Extrudate, aktiviert für 0,5 Stunden bei 400 °C), 400 °C Reaktionstemperatur, aktiviert bei 400 °C für 0,5 Stunden, 0,138 bar, 44,2-44,4 % M3 bei 34,5 - 38,7 Sekunden Kontaktzeit.

Die hohen M3 Ausbeuten in beiden Beispielen kommen durch den hohen Gehalt an TMS in der Ausgangsmischung zustande.

Die US5493043 offenbart ein Verfahren zur Anreicherung einer niedrigsiedenden Methylsilanmischung an Dimethylhydrochlorsilan oder Trimethylchlorsilan (M3) in Gegenwart eines Aluminiumoxidkatalysators über 150 °C. Die Methylsilanmischung stammt aus dem Destillat der Müller-Rochow-Synthese. um M3 in der Mischung anzureichern, sollten wenigstens Tetramethylsilan (TMS) und Dimethyldichlorsilan (M2) in der Mischung enthalten sein und die Temperatur des Verfahrens sollte im Bereich von 180-304 °C liegen.

Außerdem werden aktivierte Aluminium-haltige Katalysatoren in Reaktionen von Organosilanen beschrieben.

Die US3,207,699 offenbart mit Trimethylsilylgruppen imprägnierte Katalysatoren zur Umlagerung von Trimethylsilan. In Beispiel VI wird ein η-Al₂O₃ Katalysator befeuchtet und mit Trimethylsilan bei 510 °C imprägniert.

Die US3,346,349 offenbart synthetische Silica-Alumina-Katalysatoren, die mit Organosilanen oder Halogensilanen der Formel R₁RₙSiX₍₃₋ₙ₎ aktiviert wurden, wobei Rₙ und Ri Wasserstoff oder eine C₁-C₅-Alkylgruppe bedeuten, wobei X ein Halogen ist und n eine ganze Zahl von 0 bis 3 bedeutet. Die Katalysatoren werden zur Herstellung von Dimethyldichlorsilan aus methylierten Chlorsilanen verwendet.

Es besteht somit weiterhin der Bedarf, ein einfaches Verfahren zur Herstellung von M3 bereitzustellen, bei dem der Gehalt an M3 nah am thermodynamischen Maximum liegt, um den technischen Bedarf an diesem Rohstoff zu decken.

Diese Aufgabe wird durch das erfindungsgemäße Verfahren gelöst, das in den Ansprüchen 1-9 näher ausgeführt wird.

Das erfindungsgemäße Verfahren liefert sehr gute M3-Ausbeuten, die nah am thermodynamischen Maximum liegen. Außerdem wird M1 in stöchiometrischen Mengen gebildet, was darauf hindeutet, dass keine Nebenreaktionen oder Zersetzungsreaktionen stattfinden.

Der Gegenstand der vorliegenden Erfindung ist ein Verfahren zur Herstellung von Trimethylchlorsilan mittels Disproportionierung von Dimethyldichlorsilan (M2) in Gegenwart eines Al₂O₃-Katalysators, wobei das Dimethyldichlorsilan in Form einer Silanmischung eingesetzt wird, die mindestens 80 Gew.-% Dimethyldichlorsilan (M2) enthält, und wobei der Differenzanteil zu 100 Gew.-% M1 und M3 enthält.

Eine Silan-Disproportionierung - genau genommen müsste es Dismutierung heißen - bedeutet, dass ein einzelnes Silan sich zu zwei oder mehr verschiedenen Silanen (z.B. M2 -> M3 + M1) umlagert, wobei die Substituenten der entstehenden Silane (z.B. Cl und CH₃) ein vom ursprünglichen Silan unterschiedliches Substitutionsmuster aufweisen. Eine Silan-Disproportionierungsreaktion kann beispielsweise durch die folgende Formel (I) illustriert werden:

**2 (CH₃)₂SiCl₂ H CH₃SiCl + (CH₃)₃SiCl** **(I)**

Die Lage des thermodynamischen Gleichgewichts dieser Disproportionierung von Dimethyldichlorsilan liegt üblicherweise bei hohen Konzentrationen des Dimethyldichlorsilans. Ohne Katalysator findet die Disproportionierungsreaktion sehr langsam oder gar nicht statt, mit den Katalysatoren und Bedingungen aus dem Stand der Technik ist die Reaktion ebenfalls noch zu langsam oder erreicht nicht die thermodynamisch mögliche Ausbeute von M3.

M2 wird in Form einer Silanmischung eingesetzt, die 80 - 100 Gew.-% Dimethyldichlorsilan (M2) enthält, und wobei der Differenzanteil zu 100 Gew.-% M1 und M3 enthält.

Bevorzugt enthält die Silanmischung 98 - 100 Gew.-% M2, ganz besonders bevorzugt enthält die Silanmischung 99,5 - 100 Gew.-% M2. Bevorzugt enthält der Differenzanteil ausschließlich M1.

Der Al₂O₃-Katalysator wird vorzugsweise vor der Disproportionierung aktiviert, indem
(i) SiCl₄, oder
(ii) HCl-Gas; oder
(iii) eine Mischung aus HCl-Gas und wenigstens einem Chlorsilan der Formel **(II)**

   **RₓSiCl₄₋ₓ** **(II)**,

   worin die Reste **R** unabhängig voneinander ausgewählt werden aus der Gruppe bestehend aus (i) Wasserstoff und (ii) C₁-Cs-Alkylrest, und der Index **x** die Werte 0, 1, 2 oder 3 annimmt,
bei einer Temperatur im Bereich von 330 °C bis 550 °C über den Katalysator geleitet wird.

Die Reste **R** in Formel **(II)** werden bevorzugt unabhängig voneinander ausgewählt aus Methylrest oder Wasserstoff. Beispiele für Chlorsilane der Formel **(II)** sind Me₂SiCl₂, Me₃SiCl, MeSiCl₃, Me₂ClSiH, Cl₃SiH, SiCl₄.

Besonders bevorzugt wird der Al₂O₃-Katalysator vor der Disproportionierung aktiviert, indem HCl-Gas über den Katalysator geleitet wird.

Die Kontaktzeit bei der Aktivierung beträgt üblicherweise 1-100 Sekunden.

Bevorzugt wird ein Al₂O₃-Katalysator mit einer BET-Oberfläche im Bereich von 100 - 200 m²/g eingesetzt, besonders bevorzugt im Bereich von 150 -180 m²/g.

Die spezifische Oberfläche nach BET (BET-Oberfläche) ist die spezifische Oberfläche, die durch Adsorption von Stickstoff gemäß der Norm ASTM D 3663-78 bestimmt wird, welche auf dem Verfahren nach Brunnauer-Emmet-Teller beruht (J.Am.Chem.Soc. 1938, 60, 309-319).

Bevorzugt wird ein Al₂O₃-Katalysator mit einem Porenvolumen im Bereich von 0,1 - 1 cm³/g eingesetzt, besonders bevorzugt im Bereich von 0,4 - 0,5 cm³/g.

Das Porenvolumen kann z.B. über Quecksilberporosimetrie ermittelt werden.

Der Al₂O₃-Katalysator kann bis zu 20 Gew.-% an anderen Elementen, z.B. Kohlenstoff, oder geringere Mengen Silicium und / oder Chlor enthalten. So können z.B. Rückstände von Hilfsstoffen enthalten sein, die zur Formgebung eingesetzt wurden.

Üblicherweise liegt der Al₂O₃-Katalysator als Formkörper vor. Formkörper sind z.B. Tabletten, Granulate, Kugeln, Ringe, Zylinder, Hohlzylinder.

Bevorzugt haben die Formkörper eine Größe im Bereich von 1 - 10 mm, besonders bevorzugt im Bereich von 2 - 4 mm.

Besonders bevorzugt wird ein γ-Al₂O₃-Katalysator eingesetzt. Ganz besonders bevorzugt wird ein γ-Al₂O₃-Katalysator als Formkörper mit einer BET-Oberfläche im Bereich von 100 - 200 m²/g, einem Porenvolumen im Bereich von 0,1 - 1 cm³/g und einer Größe im Bereich von 1 - 10 mm eingesetzt.

Das erfindungsgemäße Verfahren wird besonders bevorzugt bei einer Temperatur im Bereich von 390 °C bis 490 °C und einem Druck kleiner 1 bar durchgeführt.

Das Verfahren kann kontinuierlich oder diskontinuierlich durchgeführt werden, wobei kontinuierlich bevorzugt ist. Bei kontinuierlicher Verfahrensführung kann M2 aus dem Produktgemisch destillativ abgetrennt werden und erneut ins Verfahren eingebracht werden.

Die Kontaktzeit für das Silangemisch liegt üblicherweise in einem Bereich von 0,1-120 Sekunden, bevorzugt in einem Bereich von 1-30 Sekunden, besonders bevorzugt liegt die Kontaktzeit in einem Bereich von 10-15 Sekunden.

Nach Beendigung der Umsetzung kann das Trimethylchlorsilan aus der Reaktionsmischung z.B. durch Destillation abgetrennt werden.

### Beispiele:

Die Versuche wurden in einem mit Al₂O₃ (Al 3438 T 1/8", Pellets, BASF) gefüllten Rohrreaktor durchgeführt. Der Reaktor wurde mit einem Heizmantel aufgeheizt, die mit Katalysator befüllte Heizzone hatte eine Höhe von ca. 30 cm und einen Durchmesser von 5 cm. Das M2 wurde erst verdampft und vorgeheizt bevor es mit dem Katalysator in Berührung kommen konnte. Das Produktgemisch wurde mit einem Rückflusskühler kondensiert und aufgefangen.

GC-Messungen wurden mit einem Agilent 6890N durchgeführt (WLD-Detektor; Säulen: HP5 von Agilent: Länge: 30 m/ Durchmesser: 0,32 mm/ Filmdicke: 0,25 µm; RTX-200 von Restek: Länge: 60 m/ Durchmesser: 0,32 mm/ Filmdicke: 1 µm). Retentionszeiten wurden mit den kommerziell erhältlichen Substanzen abgeglichen, alle Chemikalien wurden verwendet wie gekauft. Alle Angaben sind in Gewichtsprozent.

### Beispiel 1:

Der Katalysator wurde mit verdampftem SiCl₄ bei 450 °C aktiviert (interne Messung in der Mitte der Schüttung). Bei einer Reaktorinnentemperatur von 378 °C wurden 150 mL verdampftes M2 mit einer Kontaktzeit im Reaktor von -20 s durch das Katalysatorbett gepumpt, und die kondensierte Produktmischung wurde analysiert.

Die Produktmischung bestand zu 76,9 Gew.-% aus M2, zu 13,3 Gew.-% aus M1 und zu 9,6 Gew.-% aus M3. Geringe Mengen an nicht identifizierten Nebenprodukten waren vorhanden.

### Beispiel 2:

Mit der gleichen Katalysatorbeladung wie in Beispiel 1 wurden bei einer Reaktorinnentemperatur von 377 °C 150 mL verdampftes M2 mit einer Kontaktzeit im Reaktor von ~30 s durch das Katalysatorbett gepumpt, und die kondensierte Produktmischung wurde analysiert.

Die Produktmischung bestand zu 74,1 Gew.-% aus M2, zu 15,4 Gew.-% aus M1 und zu 10,2 Gew.-% aus M3. Geringe Mengen an nicht identifizierten Nebenprodukten waren vorhanden.

### Beispiel 3:

Mit der gleichen Katalysatorbeladung wie in Beispiel 1 wurden bei einer Reaktorinnentemperatur von 485 °C 150 mL verdampftes M2 mit einer Kontaktzeit im Reaktor von ~7 s durch das Katalysatorbett gepumpt, und die kondensierte Produktmischung wurde analysiert.

Die Produktmischung bestand zu 75,1 Gew.-% aus M2, zu 14,2 Gew.-% aus M1 und zu 10,7 Gew.-% aus M3. Geringe Mengen an nicht identifizierten Nebenprodukten waren vorhanden.

### Beispiel 4:

Der Katalysator wurde mit HCl-Gas bei 450 °C aktiviert (interne Messung in der Mitte der Schüttung). Bei einer Reaktorinnentemperatur von 390 °C wurden 150 mL verdampftes M2 mit einer Kontaktzeit im Reaktor von ~25 s durch das Katalysatorbett gepumpt, und die kondensierte Produktmischung wurde analysiert.

Die Produktmischung bestand zu 77,9 Gew.-% aus M2, zu 12,8 Gew.-% aus M1 und zu 9,3 % aus M3. Geringe Mengen an nicht identifizierten Nebenprodukten waren vorhanden.

### Beispiel 5:

Der Katalysator wurde mit einer Mischung aus HCl-Gas und verdampftem SiCl₄ bei 450 °C aktiviert (interne Messung in der Mitte der Schüttung). Bei einer Reaktorinnentemperatur von 400 °C wurden 150 mL verdampftes M2 mit einer Kontaktzeit im Reaktor von ~18 s durch das Katalysatorbett gepumpt, und die kondensierte Produktmischung wurde analysiert.

Die Produktmischung bestand zu 78,0 Gew.-% aus M2, zu 12,6 Gew.-% aus M1 und zu 9,4 Gew.-% aus M3. Geringe Mengen an nicht identifizierten Nebenprodukten waren vorhanden.

### Beispiel 6:

In einem verschlossenen Autoklav wurden 20 g Katalysator (zuvor mit HCl aktiviert) und 150 mL M2 für 3 Stunden auf 350 °C erhitzt. Nach dem Abkühlen wurde der Autoklav geöffnet und der Inhalt analysiert.

Die Produktmischung bestand zu 76,8 Gew.-% aus M2, zu 14,1 Gew.-% aus M1 und zu 9,1 Gew.-% aus M3. Geringe Mengen an nicht identifizierten Nebenprodukten waren vorhanden.

### Vergleichsbeispiel 1:

Mit einer nicht aktivierten Katalysatorbeladung wurden bei einer Reaktorinnentemperatur von 350 °C 150 mL verdampftes M2 mit einer Kontaktzeit im Reaktor von ~60 s durch das Katalysatorbett gepumpt, und die kondensierte Produktmischung wurde analysiert.

Die Produktmischung bestand zu 68,3 Gew.-% aus M2, zu 14,4 Gew.-% aus M1 und zu 7,7 Gew.-% aus M3. Außerdem waren noch 8,4 Gew.-% an teilchlorierten methylierten Disiloxanen vorhanden, die nicht weiterverwendbar sind.

Aus den Beispielen geht hervor, dass sowohl die M3-Ausbeute als auch die Menge an entstandenem M1 wesentlich besser als die im Stand der Technik erreichten Werte sind. Zudem entsprechen sie dem in der EP0219718 angegebenen thermodynamischen Gleichgewicht.

## Patentansprüche

1. Verfahren zur Herstellung von Trimethylchlorsilan (M3) und Methyltrichlorsilan (M1) mittels Disproportionierung von Dimethyldichlorsilan (M2) in Gegenwart eines Al₂O₃-Katalysators, wobei das Dimethyldichlorsilan in Form einer Silanmischung eingesetzt wird, die 80 - 100 Gew.-% Dimethyldichlorsilan (M2) enthält, und wobei der Differenzanteil zu 100 Gew.-% M1 und M3 enthält.

2. Verfahren nach Anspruch 1, wobei der Katalysator vor der Disproportionierung aktiviert wird, indem
(i) SiCl₄, oder
(ii) HCl-Gas; oder
(iii) eine Mischung aus HCl-Gas und wenigstens einem Chlorsilan der Formel **(II)**
RₓSiCl₄₋ₓ **(II)**,
worin die Reste **R** unabhängig voneinander ausgewählt werden aus der Gruppe bestehend aus (i) Wasserstoff und (ii) C₁-C₅-Alkylrest, und der Index **x** die Werte 0, 1, 2 oder 3 annimmt,
bei einer Temperatur im Bereich von 330 °C bis 550 °C über den Katalysator geleitet wird.

3. Verfahren nach Anspruch 2, wobei das Chlorsilan M2 oder SiCl₄ ist.

4. Verfahren nach Anspruch 2, wobei der Katalysator vor der Disproportionierung aktiviert wird, indem HCl-Gas über den Katalysator geleitet wird.

5. Verfahren nach einem der Ansprüche 1-4, wobei ein Al₂O₃-Katalysator mit einer BET-Oberfläche im Bereich von 100 - 200 m²/g eingesetzt wird.

6. Verfahren nach einem der Ansprüche 1-5, wobei ein Al₂O₃-Katalysator mit einem Porenvolumen im Bereich von 0,1 - 1 cm³/g eingesetzt wird.

7. Verfahren nach einem der Ansprüche 1-6, wobei ein γ-Al₂O₃-Katalysator eingesetzt wird.

8. Verfahren nach einem der Ansprüche 1-7, wobei das Silangemisch 98 - 100 Gew.-% M2 enthält.

9. Verfahren nach einem der Ansprüche 1-8, wobei das Verfahren kontinuierlich durchgeführt wird.

## Claims

1. Process for preparing trimethylchlorosilane (M3) and methyltrichlorosilane (M1) by disproportionation of dimethyldichlorosilane (M2) in the presence of an Al₂O₃ catalyst, the dimethyldichlorosilane being used in the form of a silane mixture that comprises 80-100% by weight of dimethyldichlorosilane (M2), and wherein the difference in content from 100% by weight comprises M1 and M3.

2. Process according to Claim 1, wherein the catalyst is activated prior to the disproportionation by passing
(i) SiCl₄, or
(ii) HCl gas; or
(iii) a mixture of HCl gas and at least one chlorosilane of the formula (II)
RₓSiCl₄₋ₓ (II),
where the radicals R are independently selected from the group consisting of (i) hydrogen and (ii) C₁-C₅ alkyl radical, and the index x has the values 0, 1, 2 or 3,
over the catalyst at a temperature within a range from 330°C to 550°C.

3. Process according to Claim 2, wherein the chlorosilane is M2 or SiCl₄.

4. Process according to Claim 2, wherein the catalyst is activated prior to the disproportionation by passing HCl gas over the catalyst.

5. Process according to any of Claims 1-4, wherein an Al₂O₃ catalyst having a BET surface area within a range of 100-200 m²/g is used.

6. Process according to any of Claims 1-5, wherein an Al₂O₃ catalyst having a pore volume within a range of 0.1-1 cm³/g is used.

7. Process according to any of Claims 1-6, wherein a γ-Al₂O₃ catalyst is used.

8. Process according to any of Claims 1-7, wherein the silane mixture comprises 98-100% by weight of M2.

9. Process according to any of Claims 1-8, wherein the process is executed continuously.

## Revendications

1. Procédé de préparation de triméthylchlorosilane (M3) et de méthyltrichlorosilane (M1) par dismutation de diméthyldichlorosilane (M2) en présence d'un catalyseur au Al₂O₃, le diméthyldichlorosilane étant utilisé sous forme d'un mélange de silanes qui contient 80 à 100 % en poids de diméthyldichlorosilane (M2), le complément à 100 % en poids contenant M1 et M3.

2. Procédé selon la revendication 1, dans lequel le catalyseur est activé avant la dismutation,
(i) du SiCl₄, ou
(ii) du HCl gazeux ; ou
(iii) un mélange de HCl gazeux et d'au moins un chlorosilane de Formule **(II)**
RₓSiCl₄₋ₓ **(II)**,
dans laquelle les radicaux **R** sont indépendamment les uns des autres choisis dans le groupe consistant en (i) un hydrogène et (ii) un radical alkyle en C₁-C₅, l'indice **x** prenant les valeurs 0, 1, 2 ou 3,
sont envoyés sur le catalyseur à une température dans la plage de 330 °C à 550 °C.

3. Procédé selon la revendication 2, dans lequel le chlorosilane est M2 ou SiCl₄.

4. Procédé selon la revendication 2, dans lequel le catalyseur est activé avant la dismutation, par envoi de HCl gazeux sur le catalyseur.

5. Procédé selon l'une des revendications 1 à 4, dans lequel on utilise un catalyseur au Al₂O₃ ayant une aire BET dans la plage de 100 à 200 m²/g.

6. Procédé selon l'une des revendications 1 à 5, dans lequel on utilise un catalyseur au Al₂O₃ ayant un volume de pores dans la plage de 0,1 à 1 cm³/g.

7. Procédé selon l'une des revendications 1 à 6, dans lequel on utilise un catalyseur au γ-Al₂O₃.

8. Procédé selon l'une des revendications 1 à 7, dans lequel le mélange de silanes contient 98 à 100 % en poids de M2.

9. Procédé selon l'une des revendications 1 à 8, le procédé étant mis en œuvre en continu.
